# EUROPEAN PATENT APPLICATION

(11) **EP 4 745 520 A1**
(43) Date of publication of application: **20.05.2026**
(21) Application number: 24306928.3
(22) Date of filing: 18.11.2024
(51) Int. Cl.: G01B 11/27, G06N 10/00

(54) **OPTICAL ALIGNMENT SYSTEM AND OPTICAL ALIGNMENT METHOD**

(71) Applicant: Pasqal, 91120 Palaiseau (FR)
(72) Inventor: FAVIER, Pierre, 91120 PALAISEAU (FR); DESIRE, Sarah, 91120 PALAISEAU (FR); BOURACHOT, Lilian, 91120 PALAISEAU (FR); DUTARTRE, Sylvain, 91120 PALAISEAU (FR)
(74) Representative: Plasseraud IP

(57) **Abstract**

An optical alignment system (20, 300) is configured for receiving at least a first incident laser beam (30) having a first wavelength (λ1), a second incident laser beam (40) having a second wavelength (λ2), and a reference incident laser beam (50) having a reference wavelength (λref) and propagating along a reference direction (X0); and for forming at least first emerging beam (60) and a second emerging beam (65), propagating respectively in a first emerging direction (X1) and a second emerging (X2) direction which are controlled relative to the reference direction (X0), and counter-propagating relative to the reference incident laser beam (50).

The optical alignment system (20, 300) comprises a movable alignment unit (70), an actuating unit (75); a splitting unit (80) ; a detection unit (85), comprising a first optical sensor (150), a second optical sensor (155) ; and an electronic control device (90), configured for determining the at least one positioning instruction for positioning the alignment unit (80) based on measurement data received from the first and second optical sensors (150, 155), and for transmitting said positioning instruction to the actuating unit, said positioning instruction allowing controlling at least a tilt of the first emerging direction (X1) and a tilt of the second emerging direction (X2) relative to the reference direction (X0).

## Description

### TECHNICAL FIELD OF THE INVENTION

The present invention concerns an optical alignment system, a self-aligning system comprising such an optical alignment system, a quantum system comprising such a self-aligning system, and a corresponding alignment method.

### BACKGROUND OF THE INVENTION

A quantum system, such as a quantum processing unit or quantum computing device, a quantum sensor or a quantum cryptographic device, comprises one or more laser sources.

At least one of these laser sources, called trapping source, is intended for directly or indirectly trapping at least one quantum particle in a trapping site.

The trapping source is for example configured for trapping a quantum particle, such as an atom, in a specific trapping site of an array of trapping sites, in order to generate a quantum array of qubits.

The quantum system comprises one or more other laser sources, called addressability sources.

One or more addressability sources may be configured for directly or indirectly placing one or more of the trapped particles in an excited state, such as an excited Rydberg state.

One or more addressability sources may be configured for preventing excitation into an excited state of one or more of the trapped particles.

In both cases, the respective trapped particle(s) are called addressed particle(s).

A respective wavelength of each addressing laser sources is chosen to allow a specific transition of the addressed particle(s), so as to perform a specific quantum operation.

A change of the quantum state of a given addressed particle may be represented by a rotation of a respective state vector around a first axis X and/or a second axis Z of a respective so-called Bloch sphere.

A first addressing laser source having a first wavelength may be configured for inducing a rotation of the addressed quantum particle around the first axis X.

A second addressing laser source, having a second wavelength different from the first wavelength, may be configured for inducing a rotation of the addressed quantum particle around the second axis Z.

At the level of the addressed trapping site, the addressability beams generated by the addressability sources and the trapping beams generated by the trapping source must be precisely aligned. Indeed, since the particles are trapped in the trapping sites, any misalignment of the addressability beams with respect to the particles may reduce the laser power seen by the particles. As all the physical processes involved in the addressability schemes are extremely power-dependent, the relative alignment of the addressability and trap beams is critical for the performances of the quantum computer.

In addition, if the addressability beams are not perfectly centered on the trapped particles, it can induce movements of the particles, which would increase their temperature or shift their positions. Both temperature and position of the particles being key parameters of quantum computer, in particular in case of neutral atoms, any cause inducing such movements must be strongly limited. Otherwise, the performances of the quantum system may be significantly affected.

In many implementations of the quantum system, the addressability beams counter-propagate relative to the trapping beam at the level of the trapping site.

Due to the different wavelengths of the addressability beams to be aligned with the trapping beam as well as to their counter-propagating character, and optionally to their different polarizations, aligning said three laser beams is a particularly challenging task.

Some alignment methods and systems based on spatial light modulators have been proposed for aligning a single addressability beam with a trapping beam, for example in the article CHEN, Cheng, BORNET, Guillaume, BINTZ, Marcus, et al., "Continuous symmetry breaking in a two-dimensional Rydberg array", Nature, 2023, vol. 616, no 7958, p. 691-695. These methods can theoretically be implemented for aligning successively a first addressability beam and a second addressability beam with a trapping beam. In the case of at least two addressability beams, these methods are however particularly time-consuming, induce significant laser power losses, and are not entirely satisfactory in terms of precision of the alignment. These methods are therefore not feasible on an industrial scale.

This is all the more true given that, due to variations in the environmental conditions to which the quantum system is subjected, for example a humidity level or a temperature in the surrounding atmosphere, the laser beams may become misaligned more or less often and to a greater or lesser extent. Consequently, there is a need of more or less frequent realignment of the laser beams, which in turn may have adverse consequences on the operation of the quantum system.

### SUMMARY OF THE INVENTION

Hence, one aim of the invention is to provide an optical alignment system for aligning at least two laser beams with a counter-propagating reference laser beam, allowing precise and fast alignment or realignment of the at least two laser beams with the reference laser beam, and in particular while the three lasers are in operation, i.e. while each of said two laser beams illuminate a target, successively or simultaneously, and at the same time as the reference laser beam, the reference laser beam having a potentially variable direction.

To this aim, the invention relates to an optical alignment system configured:
- for receiving at least a first incident laser beam having a first wavelength , a second incident laser beam having a second wavelength, and a reference incident laser beam having a reference wavelength (λ_{ref}) and propagating along a reference direction, and
- for forming at least first emerging beam and a second emerging beam, propagating respectively in a first emerging direction and a second emerging direction which are controlled relative to the reference direction, and counter-propagating relative to the reference incident laser beam,
the optical alignment system comprising:
a) a movable alignment unit, configured for forming at least a first intermediate beam propagating along a controllable first intermediate propagation direction from the first incident laser beam and a second intermediate beam propagating along a controllable second intermediate propagation direction from the second incident laser beam;
b) an actuating unit, configured for positioning the alignment unit according to at least one positioning instruction;
c) a splitting unit, configured for:
   - splitting the first intermediate beam at least into the first emerging beam and a first comparison beam,
   - splitting the second intermediate beam at least into the second emerging beam and a second comparison beam, and
   - forming at least a reference comparison laser beam from the reference incident laser beam;
d) a detection unit, comprising:
   - a first optical sensor, configured for receiving the first comparison beam and the second comparison beam, and
   - a second optical sensor, configured for receiving the reference comparison beam; and
e) an electronic control device, configured for determining the at least one positioning instruction for positioning the alignment unit based on measurement data received from the first and second optical sensors, and for transmitting said positioning instruction to the actuating unit, said positioning instruction allowing controlling at least a tilt of the first emerging direction relative to the reference direction and a tilt of the second emerging direction relative to the reference direction.

The splitting unit allows forming the first, second and reference comparison laser beams, the directions of which respectively depend on the directions of the first, second and reference incident laser beams having different propagation directions and potentially different wavelengths.

The directions of the first and second comparison laser beams are linked respectively to the directions of the first and second emerging beams formed by the splitting unit and counter-propagating relative to the incident reference beam.

As a consequence, images of the first and second comparison laser beams on the first sensor compared to an image of the reference comparison beam on the second sensor provide information of a respective tilt of the first and second comparison beam relative to the reference comparison beam, and consequently of a respective tilt of the first and second emerging directions relative to the reference direction.

The electronic control device allows determining positioning instructions of the movable alignment unit based on the measurement data received from the first and second optical sensors.

Hence, once the movable alignment unit is positioned according to the positioning instructions by means of the actuating unit, the first and second emerging beams can be simultaneously precisely aligned with the incident reference beam, while counter-propagating relative to this incident reference beam, and while operating the three laser beams for illuminating a target, even if the reference direction is not precisely known or evolves over time.

According to other advantageous aspects of the invention, the optical alignment system comprises one or more of the following features, taken in isolation or in any technically possible combination:
- the splitting unit is further configured for forming an additional reference comparison beam from the reference incident laser beam, a first additional comparison beam from the first intermediate beam and a second additional comparison beam from the second intermediate beam,
   the first optical sensor is further configured for receiving the additional reference comparison beam, and
   the second optical sensor is further configured for receiving the first and second additional comparison beams,
   said at least one positioning instruction further allowing controlling an offset of the first emerging direction and an offset of the second emerging direction relative to the reference direction;
- the splitting unit comprises:
   i) a first beam splitter, delimiting a first front side and a first back side and configured for forming:
      * from the incident reference laser beam received on the first front side, at least a transmitted reference beam on the first back side;
      * from the first intermediate beam received on the first front side, the first emerging beam on the first front side and the first comparison beam on the first back side;
      * from a second transmitted beam received on the first back side, the second emerging beam on the first front side and the second comparison beam on the first back side; and
   ii) a second beam splitter, delimiting a second front side and a second back side and configured for forming:
      * from the transmitted reference beam received on the second front side, the reference comparison beam on the second front side;
      * from the second intermediate beam received on the second back side, the second transmitted beam on the second front side;
- the second beam splitter is a dichroic beam splitter, at least one transmission band of which is chosen according to the second wavelength and the reference wavelength;
- the second wavelength is comprised in the transmission band of the second beam splitter and the reference wavelength is not in this transmission band, and the second and reference wavelengths are comprised in a transmission band of the first beam splitter;
- the alignment unit comprises at least:
   * a rotatable first mirror configured for controlling a tilt of the first intermediate propagation direction relative to a respective control direction; and
   * a rotatable second mirror configured for controlling a tilt of the second intermediate propagation direction relative to a respective control direction;
- the alignment unit comprises:
   * at least two rotatable first mirrors, configured for controlling in combination a tilt and an offset of the first intermediate propagation direction relative to the respective control direction; and/or
   * at least two rotatable second mirrors, configured for controlling in combination a tilt and an offset of the second intermediate propagation direction relative to the respective control direction;
- the at least one positioning instruction comprises a positioning instruction of each of the first mirrors and of each of the second mirrors.

The invention further relates to a self-aligning illumination system comprising an optical alignment system according to any of the preceding embodiments, a first laser source configured for emitting the first incident laser beam, a second laser source configured for emitting the second incident laser beam and a reference laser source configured for emitting the reference incident laser beam.

According to another advantageous aspect of the self-aligning illumination system according to the invention, at least two wavelengths chosen among the reference wavelength, the second wavelength and the first wavelength are different from each other.

The invention further relates to a quantum system comprising a self-aligning illumination system as described above and wherein the reference incident laser beam is configured for trapping at least one quantum particle having at least two quantum states in a trapping site, the optical alignment system being positioned downstream the trapping site relative to the reference incident laser beam, and the first and second emerging beams are configured for illuminating said quantum particle for modifying said quantum state.

The invention further relates to an alignment method for aligning the first and the second emerging directions of a self-aligning system as described above, the alignment method comprising:
a) emitting the first incident laser beam, the second incident laser beam and the reference incident laser beam;
b) obtaining the measurement data with the detection unit receiving the first comparison beam, the second comparison beam, and the reference comparison beam in response to said emission;
c) based on the measurement data, determining at least one positioning instruction of the alignment unit; and
d) positioning the alignment unit with the actuating unit according to said positioning instruction.

According to another advantageous aspect of the alignment method according to the invention, the at least one positioning instruction is incremental.

### BRIEF DESCRIPTION OF THE DRAWINGS

The invention will be easier to understand in view of the following description, provided solely as an example and with reference to the appended drawings in which:
- Figure 1 is a schematic view of a quantum system according to the invention;
- Figure 2 is a schematic view of the optical alignment system of the quantum system of figure 1, according to a first embodiment of the invention;
- Figure 3 is a schematic view of the optical alignment system of the quantum system of figure 1, according to a second embodiment the invention;
- Figure 4 is a flowchart of an alignment method for aligning the first and second emerging directions with the reference direction of the self-aligning illumination system of the quantum system of figure 1 according to a first embodiment;
- Figure 5 shows the qubit array of figure 1 with two different illumination configurations of the quantum particles;
- Figure 6 is a flowchart of an alignment method for aligning the first and second emerging directions with the reference direction of the self-aligning illumination system of the quantum system of figure 1 according to a second embodiment.

### DETAILED DESCRIPTION OF SOME EMBODIMENTS

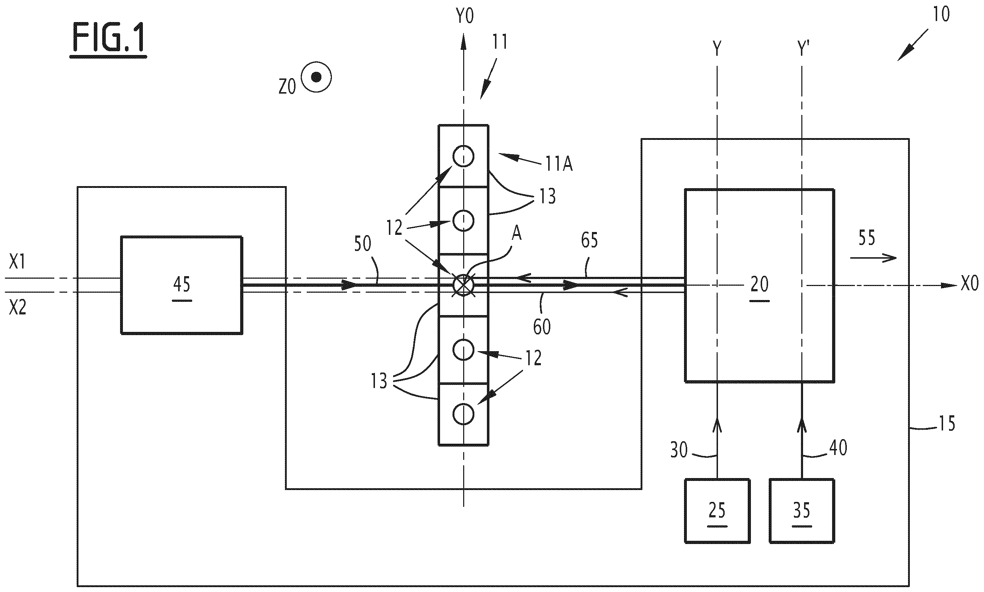

A quantum system 10 according to the invention is described in reference to figure 1.

The quantum system 10 is for example a quantum processing unit, a quantum sensor, a quantum communication device or a quantum cryptographic device.

Typically, the quantum system 10 performs operations on data based on quantum properties of matter, such as superposition and entanglement.

Unlike a classical computer based on transistors working on binary data (coded on bits, 0 or 1), the quantum system 10 works on quantum particles, also called qubits, which quantum state can take continuous rather than discrete values.

In particular, a qubit refers to a two-level quantum mechanical system. For example, a qubit comprises two basic quantum states I0> and I1> representing the possible quantum states of the qubit. According to the superposition principle of quantum mechanics, any superposition of the form al0> + bl1> (a and b being complex numbers and aa*+bb*=1) is a possible quantum state of the qubit.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327. Other embodiments are nonetheless possible.

The quantum system 10 is not represented in detail in figure 1.

As shown in figure 1, the quantum system 10 comprises for example a quantum processor comprising a qubit array 11 of quantum particles 12 trapped in trapping sites 13, as well as hardware (not represented) for manipulating these quantum particles 12 (e.g., for assembling the qubit array 11 and/or reading or modifying the state of some or all of the quantum particles 12), and at least one self-aligning illumination system 15 according to the invention.

Preferably, the quantum particles 12 are atoms, preferably neutral atoms, such as Rubidium atoms. In other embodiments, the quantum particles 12 may be chosen among other atomic species, such as alkaline atoms, for example Strontium, Cesium, Ytterbium, or ions, or molecules.

The self-aligning illumination system 15 comprises an optical alignment system 20 according to the invention, a first laser source 25 configured for emitting a first incident laser beam 30 to be received by the optical alignment system 20, a second laser source 35 configured for emitting a second incident laser beam 40 to be received by the optical alignment system 20, and a reference laser source 45 configured for emitting a reference incident laser beam 50 to be received by the optical alignment system 20.

"Self-aligning" means within the present description that the relative directions of a plurality of light beams of interest may be controlled in an automated manner with respect to a reference laser beam, which will be described more precisely hereafter, in particular even if the direction of the reference laser is not known or not precisely known a *priori* and/or even if the direction of the reference laser changes over time..

In the example of figure 1 and in the following description, the self-aligning illumination system 15 is described as a specific part of the quantum system 10 according to the invention. The skilled person will easily adapt the self-aligning illumination system 15 to other potential uses either in the quantum system 10 or in other devices implementing counter-propagating beams.

In the example, the reference incident laser beam 50 is configured for trapping at least one quantum particle 12 having at least two quantum states in a respective trapping site 13 of the qubit array 11.

In figure 1, the qubit array 11 comprises five trapping sites 13, in each of which a respective quantum particle 12 is trapped. In this illustrative example, the reference incident laser beam 50 is configured for trapping a single quantum particle 12, which is the quantum particle 12 at the center of a qubit array 11. In this case, the reference incident laser beam 50 propagates along a direction that is normal relative to an entrance face 11A of the qubit array 11.

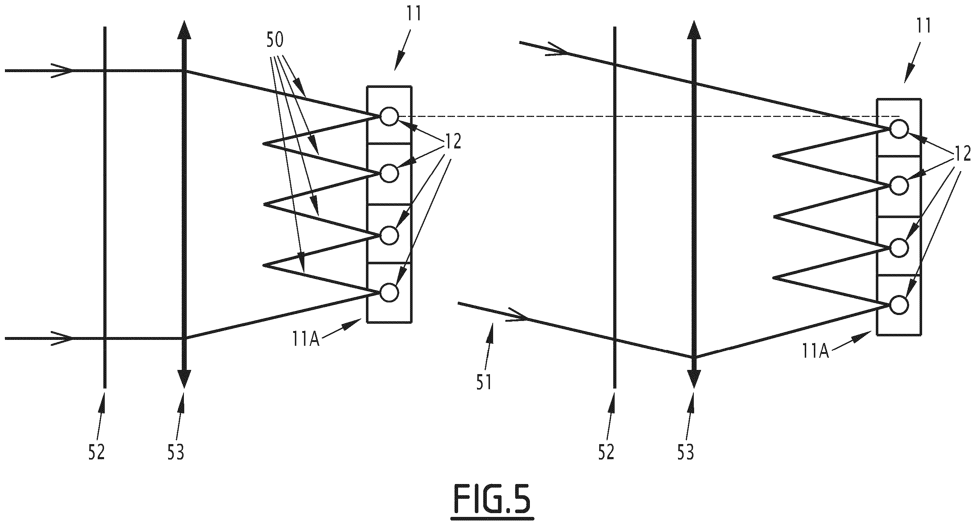

More generally, a plurality of particles 12 may be trapped, each quantum particle 12 being trapped with a respective reference incident laser beam 50, that can propagate along a more or less tilted direction relative to the entrance face 11A of the qubit array 11, as shown in figure 5.

In this case, each respective reference incident laser beam 50 may be formed from a global incident beam 51, which is spatially modulated with a spatial light modulator 52.

Optionally, the reference incident laser beam 50 may be obtained at the outlet of a reference focusing module of the quantum system 10, the reference focusing module comprising at least one additional focusing lens 53.

Hence, in the example, the reference incident laser beam 50 is a so-called trapping beam.

Thus, the reference laser source 45 is by definition upstream the trapping site 13, and the optical alignment system 20 is positioned downstream the trapping site 13 relative to the reference incident laser beam 50, such that the reference incident laser beam 50 is configured for entering the optical alignment system 20 after crossing the trapping site 13, or in other words and if applying, for being received by the optical alignment system 20 after having interacted with the quantum particle 12 to be trapped in the trapping site 13.

The reference incident laser beam 50 has a reference wavelength λ_{ref}.

In the example, the reference wavelength λ_{ref} is chosen according to the quantum particle 12 to be trapped.

For example, when the quantum particle 12 is a Rubidium atom, the reference wavelength λ_{ref} is comprised between 800 nm and 1064 nm, in particular between 815 nm and 860 nm, and is preferably equal to 815 nm.

The reference incident laser beam 50 propagates along a reference direction X₀.

The sense of propagation of the reference incident laser beam 50 along the reference direction X₀ is hereinafter called reference propagation sense 55.

The reference laser source 45 is not represented in detail in the figures.

Optionally, the reference laser source 45 comprises a polarizing unit configured for forming a reference incident laser beam 50 having a controlled polarization.

Optionally, the reference laser source 45 comprises a shaping unit configured for forming a reference incident laser beam 50 having a controlled shape.

Optionally, the reference laser source 45 comprises an isolation unit configured for isolating the reference incident laser beam 50 from potential reflected beams or stray light.

Once trapped by means of the reference incident laser beam 50, the quantum particle 12 may be addressed for performing quantum operations.

In the example, the first incident laser beam 30 and the second incident laser beam 40 are configured for allowing addressing the at least one trapped quantum particle 12, which is trapped in the trapping site 13 of the qubit array 11 by means of the reference incident laser beam 50.

The first incident laser beam 30 has a first wavelength λ₁.

In the example, the first wavelength λ₁ is chosen according to the quantum particle 12 to be addressed.

In a preferred embodiment, the first wavelength λ₁ is close to, in particular equal to the reference wavelength λ_{ref}.

In an alternative embodiment, the first wavelength λ₁ is different from the reference wavelength λ_{ref}.

For example, the first wavelength λ₁ is 815 nm in case the quantum particle 12 is a Rubidium atom.

The first incident laser beam 30 is incident on the optical alignment system 20 and propagates along a first incident direction Y.

In a particular embodiment, the first incident direction Y is different from the reference direction X₀, for example orthogonal to the reference direction X₀, as represented in figure 1.

The second incident laser beam 40 has a second wavelength λ₂.

In the example, the second wavelength λ₂ is chosen according to the quantum particle 12 to be addressed.

In a particular embodiment, the second wavelength λ₂ is different from the first wavelength λ₁ and/or from the reference wavelength λ_{ref}.

For example, the second wavelength λ₂ is 1013 nm in case the quantum particle 12 is a Rubidium atom.

More generally, in a particular embodiment, at least two wavelengths chosen among the reference wavelength λ_{ref}, the second wavelength λ₂ and the first wavelength λ₁ are different from each other, in particular the three wavelengths are different from each other.

The second incident laser beam 40 is incident on the optical alignment system 20 and propagates along a second incident direction Y'.

In a particular embodiment, the second incident direction Y' is different from the reference direction X₀, for example orthogonal to the reference direction X₀.

In a particular embodiment, the second incident direction Y' is parallel to the first incident direction Y, as represented in figure 1.

In another embodiment, the second incident direction Y' is different from the first incident direction Y, in particular orthogonal to the first incident direction Y.

The first and second laser sources 25, 35 are not represented in details in the figures.

Optionally, the first (respectively second) laser source 25 (respectively 35) comprises a polarizing unit configured for forming a first (respectively second) incident laser beam 30 (respectively 40) having a controlled polarization.

If applying, the first incident laser beam 30 and/or the second incident laser beam 40 and/or the reference incident laser beam 50 may have the same polarization or different polarizations.

Optionally, the first, respectively second, laser source 25, respectively 35, comprises a shaping unit configured for forming a first (respectively second) incident laser beam 30,respectively 40, having a controlled spatial and/or temporal shape.

For example, the shaping unit comprises a spatial light modulator (in short, SLM) configured for controlling the spatial shape of the first, respectively second, incident laser beam 30, respectively 40, and/or an acousto-optic modulator (in short, AOM) configured for controlling the spatial shape of the first, respectively second, incident laser beam 30, respectively 40.

In particular, for example in case a plurality of particles 12 are to be trapped, each quantum particle 12 being trapped with a respective reference incident laser beam 50, as shown in figure 5, the first and second laser sources 25, 35 may each comprise a shaping unit, such as a spatial light modulator, allowing forming a plurality of respective first, respectively second, incident laser beams 30, respectively 40.

In this case, the reference incident laser beam 50 may be obtained at the outlet of the reference focusing module of the quantum system 10 comprising the at least one additional focusing lens 53.

Optionally, the first, respectively second, laser source 25, respectively 35, comprises an isolation unit configured for isolating the first (respectively second) incident laser beam 30, respectively 40, from potential reflected beams or stray light.

The first, respectively second, incident laser beam 30, respectively 40, is configured to be received by the optical alignment system 20.

The optical alignment system 20 is configured:
- for receiving at least the first incident laser beam 30 having the first wavelength λ₁, the second incident laser beam 40 having the second wavelength λ₂, and the reference incident laser beam 50 having the reference wavelength λ_{ref} and propagating along the reference direction X₀, and
- for forming at least a first emerging beam 60 and a second emerging beam 65, propagating respectively in a first emerging direction X1 and a second emerging direction X2 which are controlled relative to the reference direction X₀, and counter-propagating relative to the reference incident beam 50.

By "counter-propagating" is meant that the first and second emerging beams 60, 65 propagate in a sense opposite to the reference sense 55 when the first emerging direction X1 and the second emerging direction X2 are close to the reference direction X₀, in particular parallel to the reference direction, considering an angular resolution of the optical alignment system 20 with respect to the first and second emerging directions X1, X2.

By "controlled" is meant that the optical alignment system 20 allows choosing a tilt of the first emerging direction X1 relative to the reference direction X₀, and a tilt of the first emerging direction X2 relative to the reference direction X₀, and in particular obtaining a first emerging direction X1 and a second emerging direction X2 substantially aligned with the reference direction X₀, or in other words substantially parallel to the reference direction X₀.

The tilt of the first, respectively second, emerging direction X1, respectively X2, relative to the reference direction X₀ is the angle formed by the first, respectively second, emerging direction X1, respectively X2, with the reference direction X₀.

In the example of figure 1, the first and second emerging beams 60, 65 are configured for addressing the trapped quantum particle 12 by entering the trapping site 13 at an outlet 11A of the qubit array 11 relative to the reference incident laser beam 50.

In other words, the first and second emerging beams 60, 65 are configured for illuminating the trapped quantum particle 12 for modifying its quantum state.

In case a plurality of particles 12 are to be trapped, each quantum particle 12 being trapped with a respective reference incident laser beam 50, as shown in figure 5, a plurality of respective first and second emerging beams 60, 65 may be formed.

In this case, each respective reference incident laser beam 50 may be formed from the global incident beam 51, which is spatially modulated with the spatial light modulator 52.

Optionally, the reference incident laser beam 50 may be obtained at the outlet of the reference focusing module of the quantum system 10 comprising the at least one additional focusing lens 53.

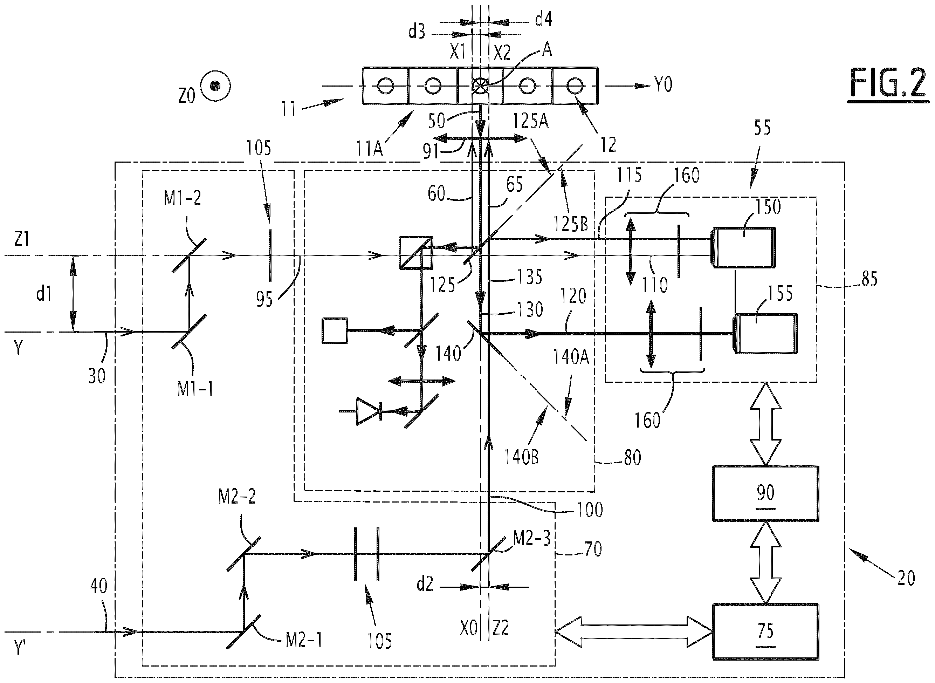

An optical alignment system 20 according to a first embodiment of the invention is described in reference to figure 2.

The optical alignment system 20 comprises a movable alignment unit 70, an actuating unit 75 configured for positioning the alignment unit 70 according to at least one positioning instruction, a splitting unit 80 downstream the alignment unit 70 for forming the first emerging beam 60 and the second emerging beam 65 and comparison beams which will be described later, a detection unit 85 configured for obtaining measurement data based on the comparison beams received from the splitting unit 80, and an electronic control device 90 configured for determining the at least one position instruction based on the measurement data.

In a particular embodiment, the quantum system 10 comprises an addressing focusing module, which comprises at least one auxiliary focusing lens 91. The addressing focusing module is configured for focusing the first and second emerging beams 60, 65 on the quantum array 11.

The movable alignment unit 70 is configured for forming at least a first intermediate beam 95 propagating along a controllable first intermediate propagation direction Z1 from the first incident laser beam 30, and a second intermediate beam 100 propagating along a controllable second intermediate propagation direction Z2 from the second incident laser beam 40.

To this end, the movable alignment unit 70 comprises for example at least one first movable mirror M1 configured for controlling a tilt of the first intermediate propagation direction Z1 relative to a respective control direction (in the example of figure 2, relative to the first incident direction Y), and at least one second movable mirror M2 configured for controlling a tilt of the second intermediate propagation direction Z2 relative to a respective control direction (in the example of figure 2, relative to the reference direction X₀).

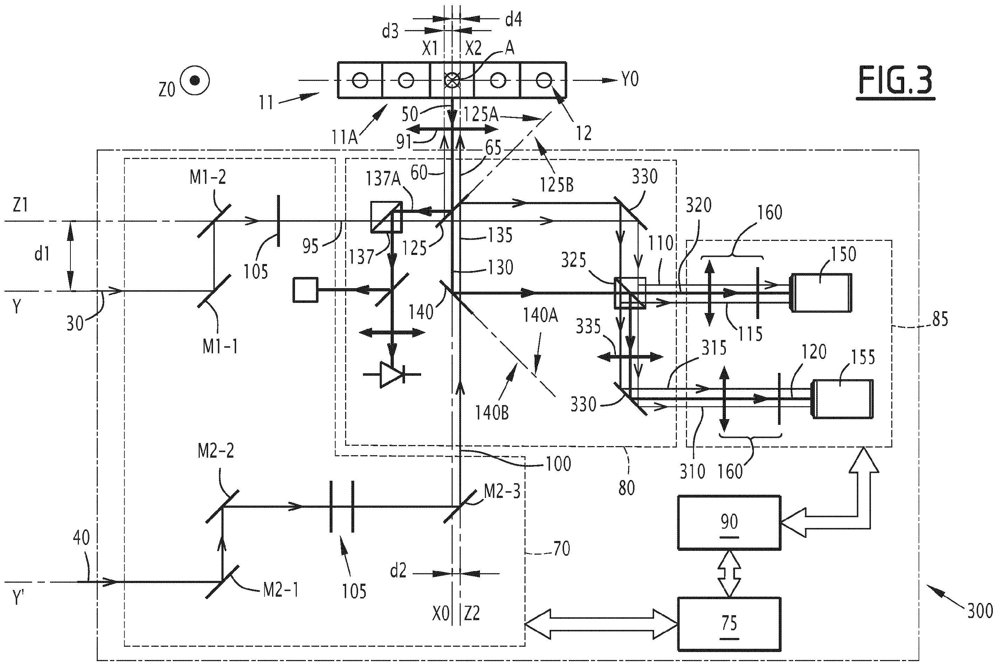

In case the movable alignment unit 70 comprises a plurality of first movable mirrors M1, the respective mirrors are referenced M1-1, M1-2, etc. In the examples of figures 2 and 3, the movable alignment unit 70 comprises two first movable mirrors M1, namely M1-1 and M1-2.

In case, the movable alignment unit 70 comprises a plurality of second movable mirrors M2, the respective mirrors are referenced M2-1, M2-2, etc. In the examples of figures 2 and 3, the movable alignment unit 70 comprises three second movable mirrors M1, namely M2-1, M2-2 and M2-3.

As will be understood later, the first emerging direction X1 and the second emerging direction X2 are linked respectively to the first intermediate propagation direction Z1 and to the second intermediate propagation direction Z2, such that the movable alignment unit 70 allows *in fine* controlling a tilt of the first emerging direction X1 and a tilt of the second emerging direction X2 relative to the reference direction X₀.

Each first movable mirror M1 is in particular configured for forming a reflected beam having a controlled propagation direction directly or indirectly from the first incident laser beam 30, and each second movable mirror M2 is in particular configured for forming a reflected beam having a controlled propagation direction directly or indirectly from the second incident laser beam 40.

The first and the second movable mirror M1, M2 are chosen among a metallic mirror, a dielectric mirror and a dichroic mirror.

The first and the second movable mirror M1, M2 have advantageously a motor-driven mount, in particular a piezomotor driven mount.

The first movable mirror M1 is for example rotatable around at least a respective rotation axis parallel to a transverse axis Z₀ orthogonal to the reference direction X₀ and to the first incident direction Y.

The second movable mirror M2 is for example rotatable around at least a respective rotation axis parallel to the transverse axis Z₀.

This provision allows controlling the first intermediate propagation direction Z1 and the second intermediate propagation direction Z2 relative to a reference frame AXoYoZo, A being for example a geometrical center of the trapping site 13, Y₀ being a longitudinal axis orthogonal to the reference direction X₀ and to the transverse axis Z₀.

In other words, the first and second intermediate propagation directions Z1, Z2 are controlled relative to an intrinsically movable reference, which is the reference direction X₀ that depends on the trapping site 13 to be addressed.

In a particular embodiment, the movable alignment unit 70 comprises at least two successive first movable mirrors M1 and/or two successive second movable mirrors M2, as represented in figure 2.

In this case, each of the first movable mirrors M1 is for example rotatable around a respective rotation axis parallel to the transverse axis Z₀, and/or each of the second movable mirrors M2 is for example rotatable at least a respective rotation axis parallel to the transverse axis Z₀.

This provision allows controlling both the tilt and an offset d1 of the first intermediate propagation direction Z1 relative to the respective control direction of the reference frame AXoYoZo (in the example of figure 2, relative to the first incident direction Y), and/or both the tilt and an offset d2 of the second intermediate propagation direction Z2 relative to the respective control direction of the reference frame AXoYoZo, (in the example of figure 2, relative to the reference direction X₀).

In particular, a pure correction of the tilt of the first intermediate propagation direction Z1 relative to the respective control direction of the reference frame AXoYoZo, i.e. without introducing an offset, may be obtained by moving at least a pair of rotatable mirrors M1. In the same manner, a pure correction of the tilt of the second intermediate propagation direction Z2 relative to the respective control direction of the reference frame AXoYoZo, i.e. without introducing an offset, may be obtained by moving at least a pair of rotatable mirrors M2.

As already mentioned, the first emerging direction X1 and the second emerging direction X2 are linked respectively to the first intermediate propagation direction Z1 and to the second intermediate propagation direction Z2, such that this provision allows *in fine* also controlling an offset d3 of the first emerging direction X1 and an offset d4 of the second emerging direction X2 relative to the reference direction X₀.

Optionally, the first movable mirror M1 and/or the second movable mirror M2 is also rotatable relative to the longitudinal axis Y₀. This allows modifying respectively a first incidence plane of the first movable mirror M1 and a second incidence plane of the second movable mirror M2. In figure 2, the first incidence plane and the second incidence plane is the plane of this figure.

This provision is particularly advantageous in case the self-aligning illumination system 15 comprises a fourth laser source (not represented) emitting a fourth incident laser beam along a fourth incident propagation direction towards the quantum particle 12 trapped in the trapping site 13.

The fourth propagation direction is advantageously the transverse direction Z₀.

The fourth incident laser beam is for example another addressability beam used to allow another transition of the particles as the first and/or second incident laser beams 30, 40, or used to perform the same operation as any of the first and second incident laser beams 30, 40 but on a specific subset of trapped quantum particles 12 with more laser power.

The fourth incident laser beam has a fourth wavelength λ₄. The fourth wavelength λ₄ is for example equal to 795nm in case of local Raman transition of a Rubidium atom between ground state hyperfine levels for digital quantum computing, or 780nm for local readout in analog and digital quantum computing.

Optionally, the movable alignment unit 70 comprises one or more waveplates 105 configured for directly or indirectly controlling a polarization of the first intermediate beam 95 and/or of the second intermediate beam 100.

The first and second intermediate beams 95, 100 are configured to be received by the splitting unit 80.

The splitting unit 80 is configured for:
- splitting the first intermediate beam 95 at least into the first emerging beam 60 and a first comparison beam 110,
- splitting the second intermediate beam 100 at least into the second emerging beam 65 and a second comparison beam 115, and
- forming at least a reference comparison laser beam 120 from the reference incident laser beam 50.

To this end, the splitting unit 80 comprises a first beam splitter 125, delimiting a first front side 125A and a first back side 125B and configured for forming:
* from the incident reference laser beam 50 received on the first front side 125A, at least a transmitted reference beam 130 on the first back side 125B;
* from the first intermediate beam 95 received on the first front side 125A, the first emerging beam 65 on the first front side 125A and the first comparison beam 110 on the first back side 125B;
* from a second transmitted beam 135 received on the first back side 125B, the second emerging beam 65 on the first front side 125A and the second comparison beam 115 on the first back side 125B; and
   ii) a second beam splitter 140, delimiting a second front side 140A and a second back side 140B and configured for forming:
* from the transmitted reference beam 130 received on the second front side 140A, the reference comparison beam 120 on the second front side 140A;
* from the second intermediate beam 100 received on the second back side 140B, the second transmitted beam 135 on the second front side 140A.

The first beam splitter 125 is for example a dichroic beam splitter.

In this case, one or more transmission bands of the first beam splitter 125 may be chosen according to the first wavelength λ₁ and/or to the second wavelength λ₂ and/or to the reference wavelength λ_{ref}.

For example the respective transmission and reflection bands may be configured such that the first emerging beam 65 and/or the second emerging beam 60 has a power of at least of 80%, preferably at least 90 %, even more preferably at least 95 % of an initial power of the first incident laser beam 30, respectively the second incident laser beam 40.

This provision allows forming a first emerging beam 60 and/or a second emerging beam 65 having a high enough power for addressing the trapped particle 12.

For example the transmission bands may be configured such that the transmitted reference beam 130 has a power of less than 20%, preferably less than 10 %, even more preferably less than 5 % of an initial power of the reference laser beam 50.

This provision allows forming a reference comparison beam 120 having a power suitable for its detection by the detection unit 85 simultaneously with the first and second comparison beams 110, 115.

Optionally, the optical alignment system comprises a complementary beam splitter 137 on the first front side 125A. The complementary beam splitter 137 is configured for separating a reflected reference beam 137A, formed by the first beam splitter 125 on the first front side 125A from the incident reference beam 50, from the first intermediate beam 95.

The complementary beam splitter 137 is for example a polarizing beam splitter, notably in case the first wavelength λ₁ and the reference wavelengths λ_{ref} are close to each other, i.e. differ from less than a few tens of nanometers, or are even equal, and the incident reference laser beam 50 and the first incident laser beam 30 have different polarizations.

This provision allows forming an efficient first emerging beam 60 and preventing any damage to the incident laser system producing the first incident laser beam 30 if the reflected reference beam 137A had significant power and would overlap with the first intermediate beam 95 in the absence of the complementary beam splitter 137.

The second beam splitter 140 is for example a dichroic beam splitter. In this case, one or more transmission bands of the second beam splitter 140 may be chosen according to the second wavelength λ₂ and/or to the reference wavelength λ_{ref}. For example the transmission bands may be configured such that the second transmitted beam 135 and/or the reference comparison beam 120 has a power of at least of 80%, preferably at least 90 %, even more preferably at least 95 % of a power of the second intermediate beam 100, respectively the transmitted reference beam 130.

In a particular embodiment, the second wavelength λ₂ is comprised in the transmission band of the second beam splitter 140 and the reference wavelength λ_{ref} is not in this transmission band.

The first comparison beam 110, the second comparison beam 115 and the reference comparison beam 120 are configured to be received by the detection unit 85.

The detection unit 85 comprises a first optical sensor 150, configured for receiving the first comparison beam 110 and the second comparison beam 115, and a second optical sensor 155, configured for receiving the reference comparison beam 120.

The detection unit 85 is configured for obtaining measurement data based on the received beams. The measurement data comprises for example data representative of a first image and a second image formed on a detection surface of the first optical sensor 150 from the first and second comparison beams 110, 115 respectively, and of a reference image formed on a detection surface of the second optical sensor 155 from the reference comparison beam 120.

In case of a plurality of reference incident laser beams 50 and of a plurality of respective first and second incident laser beams 30, 40, a respective image is obtained for each of these beams. In the example of figure 5, four respective reference images would be obtained at different positions on the detection surface of the second optical sensor 155, and four respective first images and four respective second images would be obtained at different positions on the detection surface of the first optical sensor 150.

In a particular embodiment, the first optical sensor 150 and/or the second optical sensor 155 are chosen among a four quadrant photodetector and a camera.

The detection surface of the first optical sensor 150 is at least sensitive to the first wavelength λ₁ and to the second wavelength λ₂.

The detection surface of the second optical sensor 155 is at least sensitive to the reference wavelength λ_{ref}.

The detection surface of the first (respectively second) optical sensor 150 (respectively 155) has advantageously a resolution of less than 5 µm, preferably less than 3 µm.

Optionally, the detection unit 85 comprises a conditioning device 160, configured for focusing one or more of the first comparison beam 110, the second comparison beam 115, and the reference comparison beam 120 on a respective detection surface of a respective optical sensor 150, 155, and/or for attenuating a power of the one or more of the first comparison beam 110, the second comparison beam 115 before entering a respective optical sensor 150, 155.

To this end, the conditioning device 160 comprises for example on or more lenses and one or more filter, such as a neutral density filter.

The detection unit 85 is configured for exchanging data with the electronic control device 90.

In particular, the electronic device 90 is configured for:
- receiving the measurement data from the first and second optical sensors 150, 155;
- determining based on the measurement data the at least one positioning instruction for positioning the alignment unit 80, the at least one positioning instruction allowing controlling at least a tilt of the first propagation direction X1 relative to the reference direction X₀ and a tilt of the second propagation direction X2 relative to the reference direction X₀, and
- transmitting the at least one positioning instruction to the actuating unit 75.

The electronic device 90 is for example a classical computer.

The measurement data are representative of the first emerging direction X1, the second emerging direction X2 and the reference direction X₀.

The electronic device 90 is for example configured for comparing a position of one or more specific points of the first image with a position of one or more specific points of the reference image, and a position of one or more specific points of the second image with a position of one or more specific points of the reference image, in order to determine the tilt of the first intermediate propagation direction Z1 relative to the respective control direction (in the example of figure 2, relative to the first incident direction Y), and the tilt of the second intermediate propagation direction Z2 relative to the respective control direction (in the example of figure 2, relative to the reference direction X₀).

The first emerging direction X1, as well as the propagation direction of the first comparison beam 110 directly depends on the first intermediate propagation direction Z1, which itself directly depends on the first incident direction Y and on the position of the alignment unit 70.

The second emerging direction X2, as well as the propagation direction of the second comparison beam 115 directly depends on the second intermediate propagation direction Z2, which itself directly depends on the second incident direction Y' and on the position of the alignment unit 70.

Hence, the electronic device 90 is for example configured for determining, based on said comparison, respectively the tilt of the first emerging direction X1 relative to the reference direction X₀, and the tilt of the second emerging direction X2 relative to the reference direction X₀, and for determining the at least one positioning instruction based on the determined tilts.

The actuating unit 75 is configured for positioning the alignment unit 70 according to the at least one positioning instruction transmitted by the electronic device. For example, the actuating unit 75 may comprise a controllable actuator such as at least an electric motor or a piezoelectric motor.

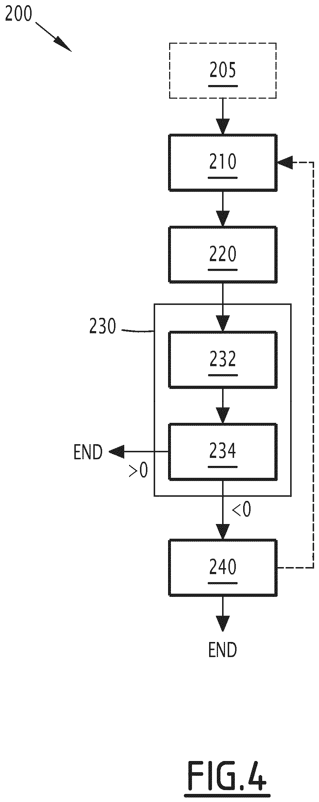

An alignment method 200 for aligning the first and the second emerging directions (X1, X2) of the self-aligning system 15 will now be described in reference to figure 4.

The alignment method 200 comprises:
a) an emission step 210 comprising emitting the first incident laser beam 30 with the first laser source 25, the second incident laser beam 40 with the second laser source 35, and the reference incident laser beam 50 with the reference laser source 45;
b) a measurement step 220, comprising obtaining the measurement data with the detection unit 85 receiving the first comparison beam 110, the second comparison beam 115, and the reference comparison beam 120 in response to said emission;
c) a determination step 230, comprising determining with the detection data at least one positioning instruction of the alignment unit 70 based on the measurement data;
d) a positioning step 240, comprising positioning the alignment unit 70 with the actuating unit 75 according to said positioning instruction.

Optionally, the alignment unit 70 is positioned according to a reference initialization position in a prior initialization step 205.

As an example, illustrated in figure 2, in the reference initialization position, the first and second movable mirrors M1, M2 are parallel to each other and such that a direction normal to an input face of each of these mirrors forms an angle of 45° with the first and second incident directions Y, Y' as well as with the reference direction X₀.The measurement data comprises for example data related to the first image formed on the first detection surface of the first optical sensor 150 with the first comparison beam 110, to the second image formed on the first detection surface with the second comparison beam 115, and to the reference image formed on the second detection surface of the second optical sensor 155 with the reference comparison beam 120.

In case of a plurality of incident reference laser beams 50 and of respective first and second incident laser beams 30, 40, the measurement data comprises for example data related to each first image formed on the first detection surface of the first optical sensor 150 with each first comparison beam 110, to each second image formed on the first detection surface with each second comparison beam 115, and to each reference image formed on the second detection surface of the second optical sensor 155 with each reference comparison beam 120.

Whatever the case, all the measurement data may be obtained simultaneously or successively.

In a first embodiment, each of the first laser source 25, the second laser source 35 and the reference laser source 45 is selectively activated while the two other sources are off, in order to obtain successively the data related to the first image(s), the data related to the second image(s) and the data related to the reference image(s). This embodiment allows easy obtaining of the measurement data, without requiring extraction of the data related to each of the first, second and reference images from a global image. This embodiment may be preferred if a delay between two successive iterations of the alignment method 200 may be long enough. Notably, even in case of a poorly stable quantum system 10, this delay is typically of the order of one hour or more, which is much longer than the time required for aligning the self-aligning illumination system 15 with the alignment method 200 according to the invention.

Alternatively, at least two of the laser source 25, the second laser source 35 and the reference laser source 45 may be simultaneously activated, in order to obtain simultaneously the respective image(s). In this case, the splitting unit 80 may be configured for forming spatially separated respective images with the at least two sources activated simultaneously in case these images are formed on the same detection surface. This embodiment allows fast obtaining of the measurement data but may render the splitting unit 80 somehow more complex.

The determination step 230 is carried out with the electronic control device 90.

The determination step 230 comprises :
- a main determination sub-step 232, comprising determining a position of a specific point of the first (respectively second and reference) image, such as a centroid of the first (respectively second and reference) comparison image, and
- a main comparison sub-step 234, comprising comparing the position of the specific point of the first image with the position of the specific point of the reference image and comparing the position of the specific point of the second image with the position of the specific point of the reference image.

Based on this comparison, the determination 230 comprises for example the determination of the tilt of the first intermediate propagation direction Z1 relative to the respective control direction (in the example of figure 2, relative to the first incident direction Y), and of the tilt of the second intermediate propagation direction Z2 relative to the respective control direction (in the example of figure 2, relative to the reference direction X₀).

In case of a plurality of incident reference laser beams 50 and of respective first and second incident laser beams 30, 40, the comparison is performed for each reference laser beam 50 and for each respective first and second incident laser beams 30, 40. The skilled person will adapt the following description to this case without difficulty.

The main comparison sub-step 234 may then comprises the determination of the tilt of the first emerging direction X1 relative to the reference direction X₀, and the tilt of the second emerging direction X2 relative to the reference direction X₀, and subsequently, the determination of the at least one positioning instruction based on the determined tilts and on respective predetermined expected tilts.

The predetermined expected tilts are advantageously equal to zero or provided in the form of an upper threshold close to zero, for example 10 µrad or less, preferably 5 µrad.

In a first embodiment, if at least one of said determined tilts is different from the respective predetermined tilt, the at least one positioning instruction is determined such that, after the positioning step 240 described hereafter, the first and second emerging directions X1, X2 are the respective expected directions, i.e. the directions associated with the predetermined expected tilts. In this case, the alignment method 200 ends after the positioning step 240 as represented with the lower END arrow in figure 4.

Alternatively, if at least one of said determined tilts is different from the respective predetermined expected tilt, the at least one positioning instruction is determined such that, after the positioning step 240 described hereafter, the first and second emerging directions are closer to the respective expected directions, i.e. the directions associated with the predetermined expected tilts. In other words, the positioning instruction is in this alternative incremental.

In this case, the emission step 210, the measurement step 220, the determination step 230 and the positioning step 240 are iterated until the first and second emerging directions are the respective expected directions.

In this case, the first and second emerging directions at the end of a given positioning step 240 may be compared with the respective expected directions based on the determined tilts and on the increment applied, or alternatively based on new measurement data as represented in figure 4.

In figure 4, the fact that the first and second emerging directions are the respective expected directions is represented by a positive result " >0", the test being otherwise negative and represented by "<0". In case of a positive result, no further iteration is performed.

In both cases, the at least one positioning instruction may comprise at least one positioning instruction of each of the first and/or second rotatable mirrors M1, M2. This is notably the case when pure tilt is to be applied with a plurality of rotatable mirrors M1 and/or a plurality of rotatable mirrors M2.

The positioning step 240 comprises moving the movable alignment unit 70 according to one or more of its degrees of freedom.

To this end, the actuating unit 75 receives the at least one positioning instruction and commands the positioning of the alignment unit 70 according to said positioning instruction.

For example, one or more of the first and second mirrors M1, M2 are moved at the positioning step 240.

Once the alignment unit 70 is positioned, if the first and second emerging beams 60, 65 are formed in response to the first and second incident laser beams, they have a controlled direction relative to the reference direction X₀, in particular they have a first and a second emerging directions aligned with the reference direction X₀ and they are counter-propagating relative to the reference direction X₀.

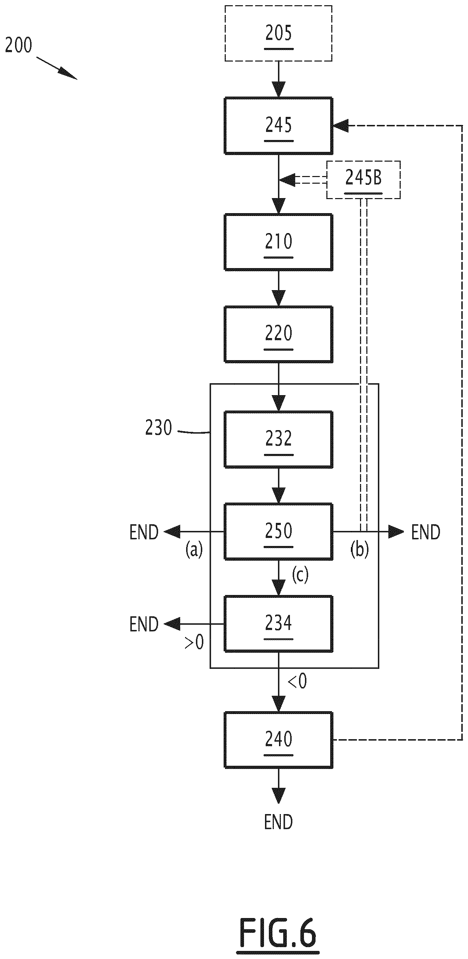

A particular embodiment of the alignment method 200 is described in reference to figure 6.

In this case, the alignment method 200 comprises a calibration step 245, at which:
i) each of the first laser source 25, the second laser source 35 and the reference laser source 45 is simultaneously or successively activated, and a respective calibration image is obtained on a respective detection surface, and
ii) a position of a specific point, for example a centroid, of each the first (respectively second and reference) calibration image is determined with the electronic control device 90, based on measurement data related to the respective calibration image.

If applying, a first calibration step 245 may be performed immediately or with a short delay after the initialization step 205.

In this particular embodiment, the determination step 230 comprises a preliminary comparison sub-step 250, at which the position of the specific point of the first (respectively second and reference) calibration image is compared with the position of the specific point of the (respectively second and reference) image. This comparison allows determining if:
(a) none of the first emerging direction X1, the second emerging direction X2 and the reference direction X₀ has evolved since an immediately preceding calibration step 245, or
(b) all of the first emerging direction X1, the second emerging direction X2 and the reference direction X₀ have evolved in the same manner since an immediately preceding calibration step 245, or
(c) none of cases (a) and (b).In cases (a) and (b), the result of the preliminary comparison sub-step 250 is positive in that the self-aligning system 15 is considered to be aligned, and no other step of the alignment method 200 has to be performed as represented by the two upper END arrows in figure 5.

In case (b), an actualization step 245B is performed, at which the positions of the specific points of the first, second and reference image replace the preceding positions of the specific points of the first, second and reference calibration images in view of a subsequent iteration of measurement step 210.

In case (c), the main comparison sub-step 234 is performed as well as the positioning step 240.

The calibration step 245 is iterated immediately or with a short delay (e.g., a few minutes or a few tens of minutes, depending on the stability of the self-aligning illumination system 15) after the positioning step 240 or after the last of the positioning steps 240 in case of an incremental positioning, in order to actualize the calibration images in view of a subsequent iteration of measurement step 210 (e.g., several hours or days or weeks later depending on the stability of the self-aligning illumination system 15).

This embodiment is advantageous when only the tilts between the first emerging direction X1 and the second emerging direction X2 relative to the reference direction X₀ is critical, and not their absolute angular positions.

An optical alignment system 300 according to a second embodiment will now be described in reference to figure 3.

The optical alignment system 300 differs from the first embodiment in that the splitting unit 80 is further configured for forming a first additional comparison beam 310 from the first intermediate beam 95, a second additional comparison beam 315 from the second intermediate beam 100, and an additional reference comparison beam 320 from the reference incident laser beam 50, the first optical sensor 150 being further configured for receiving the additional reference comparison beam 320, and the second optical sensor 155 being further configured for receiving the first and second additional comparison beams 310, 315.

In this embodiment, the at least one positioning instruction further allows controlling the offset d3 of the first emerging direction X1 and the offset d4 of the second emerging direction X2 relative to the reference direction X₀.

In this embodiment, the optical alignment system 300 comprises mandatorily at least two first mirrors M1 and at least two second mirrors M2.

In the example of figure 3, the splitting unit 80 further comprises an additional beam splitter 325.

The additional beam splitter 325 is positioned on the first back side 125B of the first beam splitter 125 and on the second front side 140A of the second beam splitter 140.

The additional beam splitter 325 is configured for forming the first comparison beam 110 and the first additional comparison beam 310 from a part of the first intermediate beam 95 that has crossed the first beam splitter 125 form the first front side 125A to the first back side 125B.

The additional beam splitter 325 is also configured for forming the reference comparison beam 120 and the additional reference comparison beam 320 from the transmitted reference beam 130.

The additional beam splitter 325 is also configured for forming the second comparison beam 115 and the second additional comparison beam 315 from the second transmitted beam 135 on the first back side 125B of the first splitting device 125.

Optionally, the splitting unit 80 further comprises one or more redirections mirror 330 upstream and/or downstream the additional beam splitter 325 relative to the first comparison beam 110 and second comparison beam 115, configured for redirecting one or more beams towards the additional beam splitter 325 and/or towards the second optical sensor 155.

In case the detection unit 85 comprises a conditioning device 160 configured for focusing the reference comparison beam 120 on the detection surface of the second optical sensor 155, the conditioning device 160 is also configured for focusing the first additional comparison beam 310 and the second additional comparison beam 315 on the detection surface of the second optical sensor 155. In this case, the splitting unit 80 mandatorily comprises at least one supplemental lens 335 for allowing, in combination with the conditioning device, determining the offsets d3, d4 of the first and second emerging directions X1, X2 relative to the reference direction X₀ from the measurement data.

In this embodiment, the measurement data further comprises for example an additional first image formed on the second detection surface of the second optical sensor 155 with the first addition comparison beam 310, an additional second image formed on the second detection surface with the second additional comparison beam 315, and an additional reference image formed on the first detection surface of the first optical sensor 150 with the additional reference comparison beam 320.

The determination step 230 then further comprises determining with the electronic control device 90 a position of a specific point of the additional first (respectively second and reference) image, such as a centroid of the additional first (respectively second and reference) image, and comparing the position of the specific point of the additional first image with the position of the specific point of the additional reference image and comparing the position of the specific point of the additional second image with the position of the specific point of the reference image.

Based on the comparisons of the first, second and reference images and of the additional first, second and reference images, the determination 230 comprises both the determination of the tilt and the offset d1 of the first intermediate propagation direction Z1 relative to the respective control direction (in the example of figure 2, relative to the first incident direction Y), and of the tilt and the offset d2 of the second intermediate propagation direction Z2 relative to the respective control direction (in the example of figure 2, relative to the reference direction X₀) .

In this case, the determination 230 then comprises the determination of the tilt and the offset d3 of the first emerging direction X1 relative to the reference direction X₀, and the tilt and the offset d4 of the second emerging direction X2 relative to the reference direction X₀, and subsequently, the determination of the at least one positioning instruction based on the determined tilts, the respective predetermined expected tilts, the determined offsets d3, d4, and respective predetermined expected offsets.

The predetermined expected offsets are advantageously close to zero, for example less than 5 µm, preferably 1 µm.

In a particular embodiment, if at least one of said determined offsets d3, d4 and tilts is different from the respective predetermined expected tilt/offset, the at least one positioning instruction is determined such that, after the positioning step 240, the first and second emerging directions are the respective expected directions and have an offset with the reference direction Xo equal to the respective predetermined expected offset.

Alternatively, if at least one of said determined offsets d3, d4 and tilts is different from the respective predetermined tilt/offset, the at least one positioning instruction is determined such that, after the positioning step 240, the first and second emerging directions are closer to the respective expected directions if applying and have an offset with the reference direction X₀ closer to the respective predetermined expected offset.

In this case, the emission step 210, the measurement step 220, the determination step 230 and the positioning step 240 are iterated until the first and second emerging directions X1, X2 are the respective expected directions and have the predetermined expected offsets with the reference direction X₀.

The optical alignment system 20, 300 and the alignment method according to the invention hence allows aligning at least two emerging beams formed with at least two laser sources with a reference laser beam formed with a reference laser source, the reference laser beam having potentially a variable propagation direction, the emerging beams counter-propagating relative to the reference laser beam, the emerging beams and the reference laser beam having potentially wavelengths and/or polarizations that are different from each other.

The alignment method is fast, precise and may be performed while operating the three laser sources, successively or simultaneously as described above, for example in a quantum system.

## Claims

1. Optical alignment system (20, 300) configured:
- for receiving at least a first incident laser beam (30) having a first wavelength (λ₁), a second incident laser beam (40) having a second wavelength (λ₂), and a reference incident laser beam (50) having a reference wavelength (λ_{ref}) and propagating along a reference direction (Xo), and
- for forming at least first emerging beam (60) and a second emerging beam (65), propagating respectively in a first emerging direction (X1) and a second emerging direction (X2) which are controlled relative to the reference direction (Xo), and counter-propagating relative to the reference incident laser beam (50), the optical alignment system (20, 300) comprising:
a) a movable alignment unit (70), configured for forming at least a first intermediate beam (95) propagating along a controllable first intermediate propagation direction (Z1) from the first incident laser beam (30) and a second intermediate beam (100) propagating along a controllable second intermediate propagation direction (Z2) from the second incident laser beam (40);
b) an actuating unit (75), configured for positioning the alignment unit (70) according to at least one positioning instruction;
c) a splitting unit (80), configured for:
- splitting the first intermediate beam (95) at least into the first emerging beam (60) and a first comparison beam (110),
- splitting the second intermediate beam (100) at least into the second emerging beam (65) and a second comparison beam (115), and
- forming at least a reference comparison laser beam (120) from the reference incident laser beam (50);
d) a detection unit (85), comprising:
- a first optical sensor (150), configured for receiving the first comparison beam (110) and the second comparison beam (115), and
- a second optical sensor (155), configured for receiving the reference comparison beam (120); and
e) an electronic control device (90), configured for determining the at least one positioning instruction for positioning the alignment unit (80) based on measurement data received from the first and second optical sensors (150, 155), and for transmitting said positioning instruction to the actuating unit, said positioning instruction allowing controlling at least a tilt of the first emerging direction (X1) relative to the reference direction (X₀) and a tilt of the second emerging direction (X2) relative to the reference direction (X₀).

2. Optical alignment system (300) according to claim 1, wherein :
- the splitting unit (80) is further configured for forming an additional reference comparison beam (320) from the reference incident laser beam (50), a first additional comparison beam (310) from the first intermediate beam (95) and a second additional comparison beam (315) from the second intermediate beam (100),
- the first optical sensor (150) is further configured for receiving the additional reference comparison beam (320), and
- the second optical sensor (155) is further configured for receiving the first and second additional comparison beams (310, 315),
said at least one positioning instruction further allowing controlling an offset (d3) of the first emerging direction (X1) and an offset (d4) of the second emerging direction (X2) relative to the reference direction (X₀).

3. Optical alignment system (20, 300) according to any of the preceding claims, wherein the splitting unit (80) comprises:
i) a first beam splitter (125), delimiting a first front side (125A) and a first back side (125B) and configured for forming:
* from the incident reference laser beam (50) received on the first front side (125A), at least a transmitted reference beam (130) on the first back side (125B);
* from the first intermediate beam (95) received on the first front side (125A), the first emerging beam on the first front side (125A) and the first comparison beam (110) on the first back side (125B);
* from a second transmitted beam (135) received on the first back side (125B), the second emerging beam (65) on the first front side (125A) and the second comparison beam (115) on the first back side (125B); and
ii) a second beam splitter (140), delimiting a second front side (140A) and a second back side (140B) and configured for forming:
* from the transmitted reference beam (130) received on the second front side (140A), the reference comparison beam (120) on the second front side (140A);
* from the second intermediate beam (100) received on the second back side (140B), the second transmitted beam (135) on the second front side (140B).

4. Optical alignment system (20, 300) according to claim 3, wherein the second beam splitter (140) is a dichroic beam splitter, at least one transmission band of which is chosen according to the second wavelength (λ₂) and the reference wavelength (λ_{ref}).

5. Optical alignment system (20, 300) according to claim 4, wherein the second wavelength (λ₂) is comprised in the transmission band of the second beam splitter (140) and the reference wavelength (λ_{ref}) is not in this transmission band, and the second and reference wavelengths are comprised in a transmission band of the first beam splitter (125).

6. Optical alignment system (20, 300) according to any of the preceding claims, wherein the alignment unit (70) comprises at least:
* a rotatable first mirror (M1) configured for controlling a tilt of the first intermediate propagation direction (Z1) relative to a respective control direction (Y); and
* a rotatable second mirror (M2) configured for controlling a tilt of the second intermediate propagation direction (Z2) relative to a respective control direction (X₀).

7. Optical alignment (20, 300) system according to claim 6, wherein the alignment unit comprises:
* at least two rotatable first mirrors (M1), configured for controlling in combination a tilt and an offset (d1) of the first intermediate propagation direction (X1) relative to the respective control direction (Y); and/or
* at least two rotatable second mirrors (M2), configured for controlling in combination a tilt and an offset (d2) of the second intermediate propagation direction (X2) relative to the respective control direction (X₀).

8. Optical alignment system (20, 300) according to claims 7 and 1, wherein the at least one positioning instruction comprises a positioning instruction of each of the first mirrors (M1) and of each of the second mirrors (M2).

9. Self-aligning illumination system (15) comprising an optical alignment system (20, 300) according to any of the preceding claims, a first laser source (25) configured for emitting the first incident laser beam (30), a second laser source (35) configured for emitting the second incident laser beam (40) and a reference laser source (45) configured for emitting the reference incident laser beam (50).

10. Self-aligning illumination system (15) according to claim 9, wherein at least two wavelengths chosen among the reference wavelength (λ_{ref}), the second wavelength (λ₂) and the first wavelength (λ₁) are different from each other.

11. Quantum system (10) comprising a self-aligning illumination system (15) according to any of claims 9 and 10, wherein the reference incident laser beam (50) is configured for trapping at least one quantum particle (12) having at least two quantum states in a trapping site (13), the optical alignment system (20, 300) being positioned downstream the trapping site (13) relative to the reference incident laser beam (50), and the first and second emerging beams (60,65) are configured for illuminating said quantum particle (12) for modifying said quantum state.

12. Alignment method (200) for aligning the first and the second emerging directions (X1, X2) of a self-aligning system (15) according to any of claims 9 and 10, the alignment method (200) comprising:
a) emitting the first incident laser beam (30), the second incident laser beam (40) and the reference incident laser beam (50);
b) obtaining the measurement data with the detection unit (85) receiving the first comparison beam (110), the second comparison beam (115), and the reference comparison beam (120) in response to said emission;
c) based on the measurement data, determining at least one positioning instruction of the alignment unit (70); and
d) positioning the alignment unit (70) with the actuating unit (75) according to said positioning instruction.

13. Alignment method according to claim 12, wherein the at least one positioning instruction is incremental.
